# EUROPÄISCHE PATENTSCHRIFT

(11) **EP 1 797 400 B1**
(45) Veröffentlichungstag und Bekanntmachung des Hinweises auf die Patenterteilung: **11.05.2011**
(21) Anmeldenummer: 05796006.4
(22) Anmeldetag: 01.10.2005
(51) Int. Cl.: G01D 11/16, G05G 5/06, H01H 3/22

(54) **DREHSTELLER**
ROTATING ACTUATOR
ACTIONNEUR ROTATIF

(30) Priorität: 05.10.2004 DE 102004049011
(43) Veröffentlichungstag der Anmeldung: 20.06.2007
(73) Patentinhaber: Leopold Kostal GmbH & Co. KG, 58507 Lüdenscheid (DE)
(72) Erfinder: JANNASCH, Hendrik, Doncaster DN 1 2 LT (GB); KOSSAKOWSKI, Thomas, 44143 Dortmund (DE)
(86) Internationale Anmeldenummer: PCT/EP2005/010630
(87) Internationale Veröffentlichungsnummer: WO 2006/037585

(56) Entgegenhaltungen:
- EP-A- 0 427 641
- EP-A- 1 220 068
- US-A1- 2002 148 715

## Beschreibung

Die Erfindung betrifft einen Drehsteller mit einer drehbar gelagerten Stellwelle und einem damit verbundenen Drehknopf, sowie mit einer Einrichtung zum Erzeugen einer Haptik beim Drehen des Drehknopfs, wobei diese Einrichtung nach Art einer mechanischen Rastung ausgebildet ist und eine Rastkurve und zumindest einen in die Rastkurve eingreifenden Rastbolzen umfaßt.

Drehsteller werden beispielsweise bei Dateneingabegeräten eingesetzt, bei denen durch Drehen des Drehstellers und gegebenenfalls durch Drücken oder Verschwenken desselben etwa eine Cursorsteuerung in unterschiedlichen Menüebenen durchgeführt werden kann. Beispielsweise kann ein solcher Drehsteller Teil eines sogenannten Joysticks sein. Ein solcher Drehsteller ist bekannt aus der DE 197 12 049 A1. Bei diesem vorbekannten Drehsteller ist getrieblich mit der Stellwelle eine Einrichtung zum Erzeugen einer Haptik gekoppelt. Bei dieser Einrichtung handelt es sich um einen Elektromotor, der entsprechend beaufschlagt ein der Drehwegung entgegengesetztes Drehmoment auf die Stellwelle ausübt. In Abhängigkeit von der Ansteuerung bzw. Aktivierung des Elektromotors sowohl hinsichtlich der den Elektromotor beaufschlagenden Stromstärke als auch in Abhängigkeit von der aktuellen Drehwinkelstellung der Stellwelle können unterschiedliche Haptiken bereitgestellt werden. Im Gegensatz zu den nach Art einer mechanischen Rastung ausgebildeten Haptikerzeugungseinrichtungen wird jedoch bei diesem Drehsteller als nachteilig empfunden, daß die Nullage des Drehstellers relativ weich ist, und daß infolge des notwendigen Aufbringens eines Gegenmomentes durch den Elektromotor beim Drehen der Handhabe ein Regelvibrieren spürbar ist.

Durch die DE 100 41 935 A1 ist ein Drehsteller bekannt geworden, bei dem mehrere ringförmig angeordnete Rastkurven übereinander angeordnet und zur Erzeugung unterschiedlicher Haptiken wahlweise durch elektromagnetisch betätigbare Spannringe aktivierbar sind. Mit dieser Einrichtung werden die zuvor genannten Nachteile bezüglich des zu schwammigen Gefühls der elektromotorisch erzeugten Haptik überwunden.

Der Drehsteller gemäß der vorliegenden Erfindung hat gegenüber den aus dem beschriebenen Stand der Technik bekannten den Vorteil, einerseits die markante Haptik der mechanischen Rasteinrichtung aufzuweisen, zugleich aber auch andererseits eine Bewegung des Drehknopfs auch ohne eine manuelle Betätigung desselben zu ermöglichen.

Dies wird erfindungsgemäß dadurch möglich, daß der Haptikerzeugungseinrichtung eine durch einen Elektromotor angetriebene Stelleinrichtung zugeordnet ist, mittels derer die Haptikerzeugungseinrichtung einschließlich des mit dieser über die Stellwelle verbundenen Drehknopfs durch Betrieb des Elektromotors drehbar ist.

Der erfindungsgemäße Drehsteller geht also aus von einem Drehsteller, dessen Haptikerzeugungseinrichtung nach Art einer mechanischen Rastung ausgebildet ist, wodurch eine präzise vorbestimmte Haptik beim Drehen der Stellwelle bereitgestellt ist. Gleichzeitig ist hier aber nun auch die gesamte Haptikerzeugungseinrichtung im Gehäuse drehbar gelagert und mittels eines Elektromotors um die Drehachse der Stellwelle auch ohne manuellen Eingriff verdrehbar.

In einem bevorzugten Ausführungsbeispiel ist vorgesehen, daß die Rastkurve auf der Innenseite eines die Stellwelle konzentrisch umgebenden Ringkörpers angeordnet ist, der wiederum auf seiner Außenseite eine umlaufende Außenverzahnung aufweist, über die er mittels eines Zahnradgetriebes mit dem Elektromotor in Eingriff ist.

In einer Weiterbildung der Erfindung ist vorgesehen, daß in dem Gehäuse eine Winkelmesseinrichtung vorhanden ist, mit der die exakte Drehstellung der Stellwelle erfasst werden kann.

Nachfolgend ist die Erfindung anhand eines Ausführungsbeispiels unter Bezugnahme auf die beigefügten Figuren erläutert. Es zeigen:
- **Fig.1:**: Eine dreidimensionale Darstellung eines erfindungsgemäßen Drehstellers

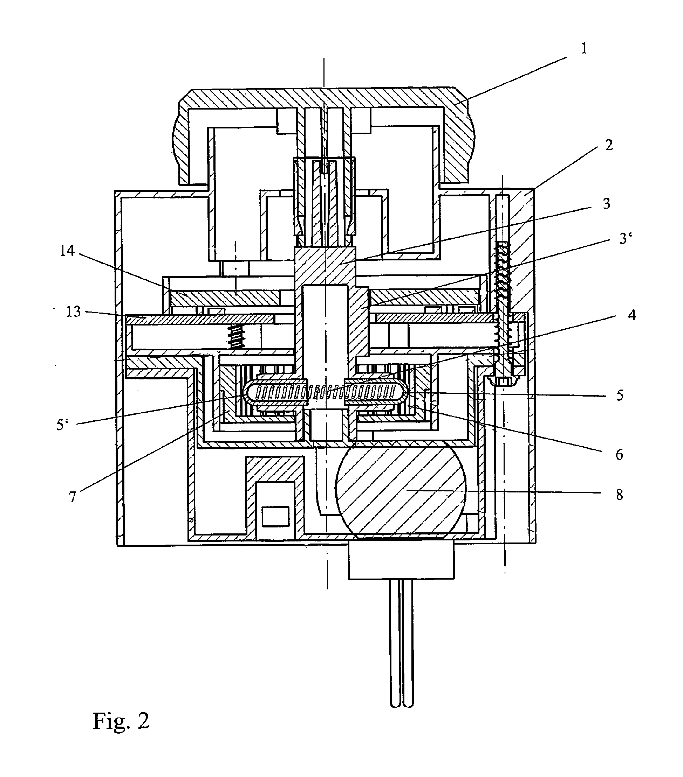

- **Fig. 2:**: Einen Längsschnitt durch den Drehsteller der Figur 1

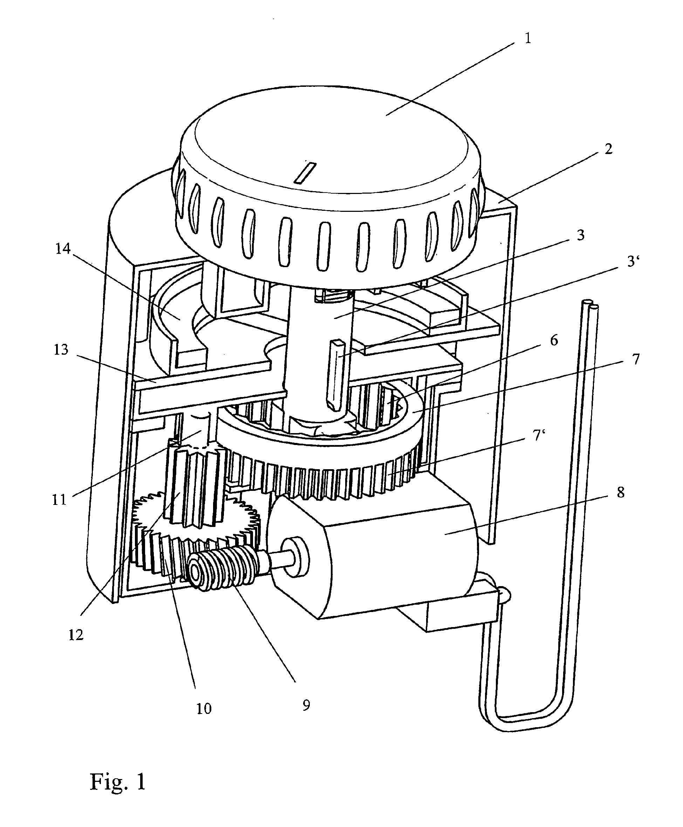

Der in der Zeichnung dargestellte Drehsteller ist bis auf den zur manuellen Bedienung vorgesehenen Drehknopf 1 in einem Gehäuse 2 aufgenommen, das in der Fig. 1 teilweise geöffnet dargestellt ist. Eine in dem Gehäuse 2 drehbar gelagerte Stellwelle 3, durchgreift das Gehäuse 2 an seiner Oberseite und verbindet den Drehknopf 1 mit einer Haptikerzeugungseinrichtung, die nach Art einer mechanischen Rastung ausgeführt ist und im wesentlichen eine ringförmige Rastkurve 6 sowie zwei in diese eingreifende federbelastete Rastbolzen 5, 5' umfaßt. Die beiden Rastbolzen 5, 5' sind einander gegenüberliegend in einer mit der Stellwelle 3 verbundenen und in einer senkrecht zur Drehachse derselben angeordneten, hülsenartigen Aufnahme durch eine Druckfeder 4 sich gegenseitig abstützend angeordnet. Die Rastkurve 6 ist auf der Innenseite eines Ringkörpers 7 ausgebildet, der um eine mit der Drehachse der Stellwelle 3 zusammenfallende Achse drehbar im Gehäuse 2 gelagert ist. Neben der Rastkurve 6 auf der Innenseite trägt der Ringkörper 7 zusätzlich auf seiner Außenseite eine umlaufende Verzahnung 7'. Über diese umlaufende Außenverzahnung 7' ist der Ringkörper 7 und damit die gesamte Haptikerzeugungseinrichtung mittels einer getrieblichen Verbindung mit einem unten im Gehäuse 2 angeordneten Elektromotor 8 in Eingriff gestellt. Die Achse des Elektromotors 8 ist dazu mit einem Schneckenrad 9 versehen, welches ein in ein schrägverzahntes Stirnrad 10 eingreift. Das schrägverzahnte Stirnrad 10 ist um eine zur Drehachse des Ringkörpers 7 parallele Achse 11 drehbar gelagert und drehfest mit einem über diesem schrägverzahnte Stirnrad 10 angeordneten und einen geringeren Durchmesser als dieses aufweisenden geradeverzahnten Strinrad 12 verbunden, welches geradeverzahnte Stirnrad 12 wiederum mit der ebenfalls geraden Außenverzahnung 7' des Ringkörpers 7 in Eingriff steht.

Wenn der Elektromotor 8 stillsteht, ist durch die Selbsthemmung des zuvor beschriebenen Getriebes eine Drehung des Ringkörpers 7 blockiert, d.h. der Ringkörper 7 und damit die Rastkurve 6 sind in ihrer Position festgesetzt. Eine manuelle Drehbewegung des Drehknopfes 1 ist dann unter Überwindung der durch das Zusammenwirken der Rastbolzen 5, 5' mit der Rastkurve 6 bereitgestellte Rastkraft der Haptikerzeugungseinrichtung zwischen jeweils benachbarten Rastpositionen derselben möglich. Ebenso ist es aber auch möglich, den Drehknopf 1 ohne einen manuellen Eingriff allein durch Betrieb des Elektromotors 8 in eine andere Position zu verstellen. Eine Drehung der Motorachse wird dabei über die getriebliche Verbindung in eine Drehung des Ringkörpers 7 umgesetzt. Da die zwischen der Rastkurve 6 an der Innenseite des Ringkörpers 7 und den Rastbolzen 5,5' wirkende Kraft deutlich größer ist, als die sonstigen auf die Stellwelle 3 einwirkenden Kräfte, die sich im wesentlichen in der Lagerreibung erschöpfen, wird über die mitbewegte Haptikerzeugungseinrichtung auch der Drehknopf 1 verstellt. Falls der Drehknopf 1 während einer motorischen Verstellung der Stellwelle 3 etwa durch Festhalten durch den Benutzer blockiert wird, wirkt die mechanische Rastung quasi als Rutschkupplung. Der Ringkörper 7 mit der Rastkurve 6 wird dann durch den Elektromotor 8 gegenüber der festgelegten Stellwelle 3 und den mit dieser verbundenen Rastbolzen 5, 5' zwischen benachbarten Raststellungen weitergedreht, so daß hiermit auch gleichzeitig ein Schutz gegen eine unbeabsichtigte Schädigung der Anordnung gegeben ist. Um die mögliche Drehung des Drehknopfes 1 auf einen festgelegten Winkelbereich einzuschränken, ist die Stellwelle 3 in einem Bereich ihres Umfangs mit einem Anschlagnocken 3' versehen, der in der jeweiligen Endposition des vorgesehenen Drehwinkelbereichs an entsprechenden Gegenanschlägen im Gehäuse 2 zur Anlage kommt.

Zur Steuerung des Drehstellers ist im Gehäuse 2 eine elektronische Steuereinrichtung vorhanden, die auf einer oberhalb der Haptikerzeugungseinrichtung die Stellwelle 3 zumindest teilweise umgreifend angeordneten Leiterplatte 13 realisiert ist. Ebenfalls auf dieser Leiterplatte 13 sind die feststehenden Abtastelemente einer Winkelmesseinrichtung zur Erfassung der Drehstellung der Stellwelle 3 vorhanden. Diese kooperieren mit entsprechenden Initiatorelementen 14, die mit der Stellwelle 3 drehfest verbunden sind und sich mit dieser in Bezug auf die feststehende Leiterplatte 13 und die mit dieser verbundenen Abtastelemente drehen. Bei diesen feststehenden Abtastelementen und den diesen zugeordneten Initiatorelementen 14 kann es sich beispielweise um Lichtschranken handeln, die mit Blenden- oder Reflexionselementen kooperieren, oder etwa um Halleffekt- bzw. magnetoresistive Sensoren, die mit entsprechend ausgebildeten Magnetstrukturen kooperieren.

Die Winkelmesseinrichtung dient zur Erfassung der exakten Winkelposition des Drehknopfes 1. Dies ist zum einen zur Auswertung einer durch eine manuelle Verstellung desselben vorgenommenen Drehbewegung erforderlich, um den damit verbundenen Schaltvorgang auslösen zu können, zum anderen dient die Winkelerfassung aber auch dazu, bei einer durch den Elektromotor 8 vorgenommen Verstellung des Drehknopfes 1 genau die gewünschte Zielposition anzufahren.

### Bezugszeichenliste

- 1: Drehknopf
- 2: Gehäuse
- 3: Stellwelle
- 3': Anschlagelement
- 4: Druckfeder
- 5,5': Rastbolzen
- 6: Rastkurve
- 7: Ringkörper
- 7': Außenverzahnung
- 8: Elektromotor
- 9: Schneckenrad
- 10: schrägverzahntes Stirnrad
- 11: Achse
- 12: gerade verzahntes Stirnrad
- 13: Leiterplatte
- 14: Initiatorelemente

## Patentansprüche

1. Drehsteller mit einer drehbar gelagerten Stellwelle (3) und einem damit verbundenen Drehknopf (1), sowie mit einer Einrichtung zum Erzeugen einer Haptik beim Drehen des Drehknopfs (1), wobei diese Einrichtung nach Art einer mechanischen Rastung ausgebildet ist und eine Rastkurve (6) und zumindest einen in die Rastkurve (6) eingreifenden Rastbolzen (5, 5') umfaßt, **dadurch gekennzeichnet, daß** der Haptikerzeugungseinrichtung eine durch einen Elektromotor (8) angetriebene Stelleinrichtung zugeordnet ist, mittels derer die Haptikerzeugungseinrichtung einschließlich des mit dieser über die Stellwelle (3) verbundenen Drehknopfs (1) durch Betrieb des Elektromotors (8) drehbar ist.

2. Drehsteller nach Anspruch 1, **dadurch gekennzeichnet, daß** die Rastkurve (6) auf der Innenseite eines die Stellwelle (3) konzentrisch umgebenden Ringkörpers (7) angeordnet ist, welcher Ringkörper (7) auf seiner Außenseite mit der Stelleinrichtung in Eingriff ist.

3. Drehsteller nach Anspruch 2, **dadurch gekennzeichnet, daß** der Ringkörper (7) auf seiner Außenseite eine umlaufende Außenverzahnung (7') aufweist, und über diese mittels eines Zahnradgetriebes mit dem Elektromotor (8) in Eingriff ist.

4. Drehsteller nach einem der Ansprüche 1 bis 3, **dadurch gekennzeichnet, daß** die Stellwelle (3) in einem Bereich ihres Umfangs mit einem Anschlagnocken (3') versehen ist, der in der jeweiligen Endposition eines vorgesehenen Drehwinkelbereichs an entsprechenden Gegenanschlägen im Gehäuse (2) zur Anlage kommt.

5. Drehsteller nach einem der Ansprüche 1 bis 4, **dadurch gekennzeichnet, daß** zur Steuerung des Drehstellers im Gehäuse (2) eine elektronische Steuereinrichtung vorhanden ist, die auf einer oberhalb der Haptikerzeugungseinrichtung die Stellwelle (3) zumindest teilweise umgreifend angeordneten Leiterplatte (13) realisiert ist.

6. Drehsteller nach einem der Ansprüche 1 bis 5, **dadurch gekennzeichnet, daß** in dem Gehäuse (2) eine Winkelmesseinrichtung zur Erfassung der Drehstellung der Stellwelle (3) vorhanden ist.

7. Drehsteller nach Anspruch 6, **dadurch gekennzeichnet, daß** die Winkelmesseinrichtung auf der Leiterplatte (13) angeordnete, feststehende Abtastelemente und mit der Stellwelle (3) drehfest verbundene und sich mit dieser in Bezug auf die feststehende Leiterplatte (13) drehende Initiatorelemente (14) umfaßt.

## Claims

1. Rotary actuator with a pivoted actuator shaft (3) and a rotary knob (1) connected to the same and with a facility for generating a haptic response upon turning the rotary knob (1), for which purpose this facility is designed in the fashion of a mechanical indexing system and is composed of a detent cam (6) and at least one detent pin (5, 5') engaging in the detent cam (6), **characterised in that** an activating device driven by an electric motor (8) is allocated to the facility for generating a haptic response by means of which the facility for generating a haptic response can be pivoted together with the rotary knob (1) connected to the same via the actuator shaft (3) by operating the electric motor (8).

2. Rotary actuator according to Claim 1, **characterised in that** the detent cam (6) is located on the inner surface of an annular member (7) that concentrically encompasses the actuator shaft (3), said annular member (7) engaging by way of its outer surface with the activating device.

3. Rotary actuator according to Claim 2, **characterised in that** the annular member (7) has a circumferential external toothing (7') on its outer surface and engages with the electric motor (8) via the same by means of a gear drive.

4. Rotary actuator according to any of Claims 1 to 3, **characterised in that** the actuator shaft (3) is provided in a section of its circumference with a stop cam (3') which, in the relevant end position of a rotary angle zone, comes to rest against corresponding counter-stops in the housing (2).

5. Rotary actuator according to any of Claims 1 to 4, **characterised in that** an electronic control device provided for controlling the rotary actuator in the housing (2) is implemented on a printed circuit board (13) which is located above the facility for generating a haptic response and at least partially encompasses the actuator shaft (3).

6. Rotary actuator according to any of Claims 1 to 5, **characterised in that** an angle measuring device for capturing the rotary position of the actuator shaft (3) is provided in the housing (2).

7. Rotary actuator according to Claim 6, **characterised in that** the angle measuring device incorporates fixed position sensing elements arranged on the printed circuit board (13) and initiator elements (14) that are connected to the actuator shaft (3) in a torque-proof manner and rotate with the same in relation to the fixed-position printed circuit board (13).

## Revendications

1. Actionneur rotatif avec un premier arbre de commande (3), monté de manière rotative, et un bouton rotatif (1) relié à celui-ci, ainsi qu'avec un dispositif, qui génère un retour haptique lors d'une rotation du bouton rotatif (1), sachant que ce dispositif est réalisé à la manière d'un enclenchement mécanique et comprend une courbe d'arrêt (6) et au moins un boulon d'arrêt (5, 5'), qui s'engage dans la courbe de blocage (6), **caractérisé en ce qu'**au dispositif haptique est associé un système de commande, entraîné par un moteur électrique (8), au moyen duquel le dispositif haptique, y compris le bouton rotatif (1), qui est relié à celui-ci par l'intermédiaire de l'arbre de commande (3), peut tourner lors du fonctionnement du moteur électrique (8).

2. Actionneur rotatif selon la revendication 1, **caractérisé en ce que** la courbe de blocage (6) est disposée sur la face intérieure d'un corps annulaire (7), qui entoure concentriquement l'arbre de commande (3), lequel corps annulaire (7) est en prise avec le dispositif de commande, par sa face extérieure.

3. Actionneur rotatif selon la revendication 2, **caractérisé en ce que** le corps annulaire (7) présente, sur sa face extérieure, une denture périphérique continue (7') et, par l'intermédiaire de celle-ci, est en prise avec le moteur électrique (8) au moyen d'un engrenage.

4. Actionneur rotatif selon l'une des revendications 1 à 3, **caractérisé en ce que** l'arbre de commande (3) est pourvu, dans une région de sa périphérie, d'une came de butée (3'), qui, dans chaque position finale d'une zone d'angle de rotation, vient porter, dans le carter (2), contre des contrebutées correspondantes.

5. Actionneur rotatif selon l'une des revendications 1 à 4, **caractérisé en ce que**, pour la commande de l'actionneur rotatif, est prévu dans le carter (2), un système de commande électronique, qui est réalisé sur une plaquette de circuits (13), qui, disposée au-dessus du dispositif haptique, entoure, au moins partiellement, l'arbre de commande (3).

6. Actionneur rotatif selon l'une des revendications 1 à 5, **caractérisé en ce qu'**un système de mesure angulaire est prévu dans le carter (2) pour la détection de la position rotative de l'arbre de commande (3).

7. Actionneur rotatif selon la revendication 6, **caractérisé en ce que** le système de mesure angulaire comprend des éléments de captage fixes, disposés sur la plaquette de circuits (13), et des éléments initiateurs (14), qui sont reliés, solidaires en rotation, avec l'arbre de commande (3), et tournent avec celui-ci par rapport à la plaquette de circuits (13) fixe.
